(19) Europäisches Patentamt

European Patent Office

Office européen des brevets

(11) Numéro de publication: **0 528 481 A1**

(12) DEMANDE DE BREVET EUROPEEN

(21) Numéro de dépôt: 92202416.1

(22) Date de dépôt: 05.08.92

(51) Int. Cl.⁵: **C08J 9/14**, //C11D7/30, C09K5/04,H05K3/26

(30) Priorité: **19.08.91 BE 9100755**

(43) Date de publication de la demande:
**24.02.93 Bulletin 93/08**

(84) Etats contractants désignés:
**AT BE CH DE DK ES FR GB GR IT LI LU NL PT SE**

(71) Demandeur: **SOLVAY (Société Anonyme)**
**Rue du Prince Albert, 33**
**B-1050 Bruxelles(BE)**

(72) Inventeur: **Barthelemy, Pierre**
**Chaussée de Wavre, 115/18**
**B-1370 Jodoigne(BE)**
Inventeur: **Paulus, Mireille**
**Avenue Stienon, 7/3**
**B-1020 Bruxelles(BE)**

(74) Mandataire: **Marckx, Frieda et al**
**Solvay Département de la Propriété**
**Industrielle 310, rue de Ransbeek**
**B-1120 Bruxelles (BE)**

(54) **Compositions comprenant un éther fluoré et utilisation de ces compositions.**

㊼ L'invention concerne des compositions azéotropiques et pseudo-azéotropiques comprenant le difluorométhoxy-2,2,2-trifluoroéthane avec le 2,2-dichloro-1,1,1-trifluoroéthane ou avec le 1,1-dichloro-1-fluoroéthane. Ces compositions sont utilisables comme solvants, notamment pour le nettoyage de composants électroniques et pour le dégraissage des métaux, comme agents gonflants, notamment pour la préparation de mousses de polyuréthanne ou encore comme réfrigérants.

EP 0 528 481 A1

EP 0 528 481 A1

L'invention concerne des compositions azéotropiques et pseudo-azéotropiques comprenant un éther fluoré et les utilisations de ces compositions, notamment comme solvant, comme agent gonflant ou comme fluide réfrigérant.

Les solvants chlorofluorés complètement halogénés (CFC), tels que le 1,1,2-trichloro-1,2,2-trifluoroéthane (CFC-113), sont largement utilisés dans l'industrie pour le dégraissage et le nettoyage de surfaces diverses, particulièrement pour les pièces délicates, compliquées et difficiles à nettoyer. Les solvants peuvent être mis en oeuvre de différentes manières, impliquant le plus souvent au moins une étape en phase vapeur.

Le CPC-113 est souvent utilisé pour le nettoyage des cartes de circuits imprimés et pour le nettoyage ou le dégraissage de pièces de précision, notamment en optique, en mécanique ou en électronique. Le CFC-113 est utilisé soit pur, soit en mélange avec d'autres composés, notamment des alcanes, des alcools ou des esters qui augmentent le pouvoir solvant du produit. L'emploi de mélanges de type azéotropique est alors intéressant, puisque la composition du bain ne varie pas au cours du temps ni au cours des différentes étapes du procédé de nettoyage.

Différentes compositions à base de CFC-113 sont aussi classiquement utilisées code agent dessicatif, afin d'éliminer l'eau adsorbée à la surface de pièces délicates.

Dans les procédés de préparation de matériaux polymériques cellulaires, tels que des mousses de polyuréthanne, le trichlorofluorométhane (CFC-11), le dichlorodifluorométhane (CFC-12) et dans une moindre mesure, le chlorodifluorométhane (HCFC-22), le trichlorotrifluoroéthane (CFC-113) et le dichlorotetrafluoroéthane (CFC-114) ont été pendant longtemps utilisés comme agent gonflant. En raison de sa très faible conductivité thermique, le CFC-11 permet d'obtenir des mousses de polyuréthanne rigides particulièrement isolantes, lesquelles sont utilisées intensivement comme isolants thermiques, notamment dans les domaines du bâtiment, de la réfrigération et des transports. L'utilisation d'alcanes chlorofluorés comme agent gonflant dans les procédés de préparation de ces matériaux cellulaires est bien connue.

Le CFC-11 et d'autres chlorofluoroalcanes complètement halogénés sont aussi utilisés classiquement comme fluides réfrigérants dans certains compresseurs frigorifiques.

Toutefois, les chlorofluoroalcanes complètement halogénés (CFC) traditionnellement utilisés comme agents nettoyants, comme agents gonflants ou comme réfrigérants sont aujourd'hui suspectés de provoquer des problèmes d'environnement dans le cadre de la destruction de la couche d'ozone stratosphérique. L'influence qu'un produit peut avoir sur la couche d'ozone a été quantifiée, à partir de modèles mathématiques complexes, par son potentiel destructeur de l'ozone (ODP) et est exprimée relativement à l'ODP du CFC-11. Un accord mondial, "le Protocole de Montréal", signé en septembre 87, a appelé à une réduction de la consommation et de la production des CFC, avec, à terme, l'interdiction de les utiliser. En conséquence, il y a actuellement un besoin urgent de trouver de nouveaux agents nettoyants, de nouveaux agents gonflants, de nouveaux réfrigérants ayant peu ou pas d'influence sur la couche d'ozone.

A cette fin, un certain nombre de compositions azéotropiques à base de certains chlorofluorocarbones non complètement halogénés, connus sous le terme générique hydrochlorofluorocarbones (HCFC) ou hydrofluoroalcanes (HFA), tels le 1,1-dichloro-1-fluoroéthane (HCFC-141b) ou le 2,2-dichloro-1,1,1-trifluoroéthane (HCFC-123), en mélange entre eux ou avec notamment le méthanol ou l'éthanol, ont été proposées (EP-A-325265; EP-A-389133; EP-A-392668; WO89/10984; WO89/12118). L'ODP du HCFC-141b est égal à environ 0,1 et celui du HCFC-123 est de l'ordre de 0,02. Ces produits représentent donc déjà un progrès très important par rapport aux CFC classiques. La demande de brevet EP-A-416777 décrit un procédé de préparation de mousses polymériques avec un éther fluoré comme agent gonflant. Cette demande ne divulgue cependant pas de compositions azéotropiques.

Un des objets de la présente invention est de fournir de nouvelles compositions azéotropiques ou pseudo-azéotropiques présentant un ODP très faible, utilisables notamment comme agent nettoyant, comme agent gonflant de matériaux polymériques cellulaires ou encore comme fluide réfrigérant, en remplacement des chlorofluoroalcanes complètement halogénés suspectés d'attaquer la couche d'ozone stratosphérique.

La présente invention concerne des compositions azéotropiques ou pseudo-azéotropiques comprenant le difluorométhoxy-2,2,2-trifluoroéthane et au moins un composé choisi parmi le 2,2-dichloro-1,1,1-trifluoroéthane (HCFC-123) et le 1,1-dichloro-1-fluoroéthane (HCFC-141b). En ce qui concerne son impact sur l'environnement, le difluorométhoxy-2,2,2-trifluoroéthane apparaît particulièrement intéressant, puisqu'en raison de l'absence de chlore dans sa structure moléculaire, il présente un ODP nul. La présence de difluorométhoxy-2,2,2-trifluoroéthane dans les compositions selon l'invention permet donc de diminuer d'autant leur ODP.

Par composition azéotropique ou pseudo-azéotropique, on entend tout mélange de deux ou plusieurs substances à point d'ébullition quasi constant, qui se comporte comme une substance pure, c'est-à-dire dont la composition de la vapeur produite par évaporation ou par distillation est substantiellement identique à la composition du mélange liquide. En pratique, ces azéotropes ou pseudo-azéotropes à point d'ébullition quasi constant, soit minimum soit maximum, ne sont donc pas séparables par simple distillation ou par évaporation préférentielle.

Fondamentalement, l'état thermodynamique d'un fluide est défini par quatre variables interdépendantes : la pression (P), la température (T), la composition de la phase liquide (X) et la composition de la phase gazeuse (Y). Un azéotrope ou un pseudo-azéotrope est un système particulier à 2 ou plusieurs composants pour lequel, à une température donnée et à une pression donnée, X est substantiellement égal à Y. Les compositions selon l'invention sont caractérisées par leur composition observée à pression atmosphérique. Il va sans dire que cela ne limite pas les compositions selon l'invention à ces compositions particulières; toutes les compositions comprenant le difluorométhoxy-2,2,2-trifluoroéthane et au moins un composé choisi parmi le 2,2-dichloro-1,1,1-trifluoroéthane et le 1,1-dichloro-1-fluoroéthane présentant un caractère azéotropique ou pseudo-azéotropique tel que défini ci-avant sont couvertes par l'invention, quelle que soit la pression à laquelle ces compositions sont mises en oeuvre. Il est en effet bien connu qu'un azéotrope à 2 ou plusieurs constituants voit sa composition et son point d'ébullition varier en fonction des conditions de pression retenues.

Il a été découvert que les mélanges liquides de difluorométhoxy-2,2,2-trifluoroéthane et de HCFC-123 et les mélanges liquides de difluorométhoxy-2,2,2-trifluoroéthane et de HCFC-141b produisent, par évaporation, une vapeur dont la composition est sensiblement identique à celle du mélange liquide. En conséquence, l'évaporation de ces mélanges, qu'elle soit naturelle ou forcée par ébullition ou par détente de la pression, ne provoque pas de séparation significative des compositions en leurs composants. Il a en outre été observé que ces mélanges bouillent à une température inférieure aux points d'ébullition de leurs composants. Les mélanges de difluorométhoxy-2,2,2-trifluoroéthane (point d'ébullition à pression atmosphérique d'environ 29,8 °C) et de 2,2-dichloro-1,1,1-trifluoroéthane (point d'ébullition à pression atmosphérique d'environ 27,8 °C) bouillent à pression atmosphérique à une température d'environ 27,0 ± 1 °C. Les mélanges de difluorométhoxy-2,2,2-trifluoroéthane et de 1,1-dichloro-1-fluoroéthane (point d'ébullition à pression atmosphérique d'environ 31,7 °C) bouillent à pression atmosphérique à une température d'environ 28,5 ± 1 °C.

Les mélanges binaires constitués d'environ 5 à 95 % en poids de difluorométhoxy-2,2,2-trifluoroéthane et d'environ 95 à 5 % en poids de 2,2-dichloro-1,1,1-trifluoroéthane forment des azéotropes ou des pseudo-azéotropes selon l'invention. Les azéotropes ou les pseudo-azéotropes formés par les mélanges binaires constitués d'environ 20 à 80 % en poids de difluorométhoxy-2,2,2-trifluoroéthane et d'environ 80 à 20 % en poids de 2,2-dichloro-1,1,1-trifluoroéthane sont préférés. Les azéotropes ou les pseudo-azéotropes formés par les mélanges binaires constitués d'environ 30 à 65 % en poids de difluorométhoxy-2,2,2-trifluoroéthane et d'environ 70 à 35 % en poids de 2,2-dichloro-1,1,1-trifluoroéthane sont particulièrement préférés. A pression atmosphérique, la composition binaire constituée d'environ 45 % en poids de difluorométhoxy-2,2,2-trifluoroéthane et d'environ 55 % en poids de 2,2-dichloro-1,1,1-trifluoroéthane constitue un azéotrope vrai, dont le point d'ébullition est d'environ 26,0 °C. Cette composition est tout particulièrement préférée.

Les mélanges binaires constitués d'environ 5 à 95 % en poids de difluorométhoxy-2,2,2-trifluoroéthane et d'environ 95 à 5 % en poids de 1,1-dichloro-1-fluoroéthane forment des azéotropes ou des pseudo-azéotropes selon l'invention. Les azéotropes ou les pseudo-azéotropes formés par les mélanges binaires constitués d'environ 30 à 85 % en poids de difluorométhoxy-2,2,2-trifluoroéthane et d'environ 70 à 15 % en poids de 1,1-dichloro-1-fluoroéthane sont préférés. Les azéotropes ou les pseudo-azéotropes formés par les mélanges binaires constitués d'environ 45 à 75 % en poids de difluorométhoxy-2,2,2-trifluoroéthane et d'environ 55 à 25 % en poids de 1,1-dichloro-1-fluoroéthane sont particulièrement préférés. A pression atmosphérique, la composition binaire constituée d'environ 61 % en poids de difluorométhoxy-2,2,2-trifluoroéthane et d'environ 39 % en poids de 1,1-dichloro-1-fluoroéthane constitue un azéotrope vrai, dont le point d'ébullition est d'environ 27,5 °C. Cette composition est tout particulièrement préférée.

De petites quantités d'autres additifs peuvent également être ajoutées aux compositions selon l'invention. On peut ainsi leur ajouter des stabilisants, des agents tensioactifs ou tous autres additifs permettant d'améliorer leurs performances lors de leur utilisation. Les autres additifs éventuels sont ajoutés à raison d'environ 0,001 à 5 % en poids du mélange azéotropique ou pseudo-azéotropique.

L'invention concerne également l'utilisation des compositions azéotropiques ou pseudo-azéotropiques selon l'invention, comprenant le difluorométhoxy-2,2,2-trifluoroéthane et au moins un composé choisi parmi le 2,2-dichloro-1,1,1-trifluoroéthane (HCFC-123) et le 1,1-dichloro-1-fluoroéthane (HCFC-141b) comme agent de nettoyage, en particulier comme solvant, comme agent dégraissant, comme agent défluxant ou comme agent dessicant. L'invention concerne également l'utilisation des compositions azéotropiques ou pseudo-azéotropiques selon l'invention, comme agent gonflant pour la préparation de matériaux polymériques cellulaires, comme fluide réfrigérant ou comme gaz propulseur pour conditionnement sous pression.

De par leur nature azéotropique ou pseudo-azéotropique, les compositions selon l'invention peuvent être mises en oeuvre dans toute application sans qu'une séparation de ces compositions en leurs constituants n'intervienne par évaporation ou par distillation. Le caractère azéotropique de ces compositions est particulièrement intéressant lorsqu'elles sont utilisées dans des procédés de nettoyage par solvant. Ces compositions présentent une très bonne compatibilité avec les différents types de surfaces à traiter, qu'elles soient en métal, en plastique ou en verre.

Les compositions selon l'invention conviennent pour toute opération de nettoyage à froid ou de nettoyage de surfaces à la vapeur.

Les compositions selon l'invention apparaissent également particulièrement efficaces dans des procédés de nettoyage de cartes de circuits imprimés, procédés destinés à éliminer de la surface de ces cartes le flux décapant utilisé dans l'étape de soudure des composants électroniques et ses résidus. Des flux de brasage classiques sont constitués de collophane, utilisée seule ou avec certains activants. Les flux et leurs résidus sont éliminés de la surface des cartes de circuits imprimés de manière particulièrement efficace et sélective avec les compositions selon l'invention, même lorsque ces flux sont fortement activés. Les compositions azéotropiques ou pseudo-azéotropiques selon l'invention possédent en effet un pouvoir solvant élevé pour le flux et ses résidus sans cependant altérer le matériau constituant le support de la carte ni les composants électroniques disposés sur celle-ci. En outre, les compositions selon l'invention présentent certaines caractéristiques, de viscosité et de tension superficielle notamment, particulièrement bien adaptées à cette application.

Les compositions selon l'invention peuvent également être utilisées dans tout autre procédé en remplacement des compositions à base de CFC-113. Elles conviennent particulièrement bien comme agent dessicatif, c'est-à-dire pour éliminer l'eau adsorbée à la surface d'objets solides nécessitant une surface parfaitement propre, tels que circuits imprimés, plaques au silicium, verres d'optique, pièces détachées d'horlogerie et toutes autres pièces de précision.

Les compositions selon l'invention peuvent également être utilisées comme agent gonflant dans tout procédé de préparation d'un matériau polymérique cellulaire par polymérisation, polycondensation ou polyaddition des réactifs en présence d'un agent gonflant ou par soufflage à l'aide d'un agent gonflant d'un matériau thermoplastique préalablement polymérisé. Il a été trouvé que les compositions selon l'invention sont d'excellents agents gonflants pour la production de matériaux polymériques cellulaires, en particulier pour ceux à base de polyuréthanne. La qualité des mousses produites en utilisant ces agents gonflants est sensiblement identique à celle des produits obtenus conventionnellement, par exemple à l'aide de CFC-11. Les compositions selon l'invention conviennent particulièrement bien pour la production de mousses flexibles, semi-rigides ou rigides à base de polyisocyanates, telles que les mousses de polyuréthanne et les mousses de polyisocyanurates. Elles peuvent aussi être utilisées pour la préparation d'autres matériaux polymériques cellulaires à base, par exemple, de polyoléfines, de polychlorure de vinyle, de polystyrène ou de résines phénoliques. Différentes techniques bien connues de mise en oeuvre permettant de fabriquer ces matériaux cellulaires sont décrites, par exemple, dans "Encyclopedia of Polymer Science and Engineering", Vol.3, 1985, pages 1 à 60.

De par leur nature azéotropique ou pseudo-azéotropique, les compositions selon l'invention peuvent également être utilisées comme fluides réfrigérants dans certains compresseurs frigorifiques, tels que les "chillers" centrifuges.

Les exemples ci-après, non limitatifs, illustrent l'invention de manière plus détaillée.

Exemple 1

Pour mettre en évidence l'existence de compositions azéotropiques ou pseudo-azéotropiques entre le difluorométhoxy-2,2,2-trifluoroéthane et le 1,1-dichloro-1-fluoroéthane, on a utilisé un appareillage de distillation en verre constitué d'un flacon bouilleur surmonté d'un condenseur à reflux. La température du liquide est mesurée à l'aide d'un thermomètre plongeant dans le flacon.

25 ml de difluorométhoxy-2,2,2-trifluoroéthane pur sont chauffés à la pression atmosphérique jusqu'à ébullition, puis de petites quantités de 1,1-dichloro-1-fluoroéthane sont progressivement introduites dans le flacon, au moyen d'une seringue graduée, via une tubulure latérale équipée d'un septum.

La détermination de la composition azéotropique se fait par relevé de l'évolution de la température d'ébullition du mélange en fonction de sa composition. La composition pour laquelle est observé un point d'ébullition minimum ou maximum est la composition azéotropique à la pression atmosphérique.

L'influence de la pression atmosphérique sur la température d'ébullition des mélanges est corrigée à l'aide de la formule suivante :

$$tc = tr + 0,00012 \ (760-P) \ (273 + tr)$$

avec

tr,  la température relevée en °C

tc,  la température corrigée en °C

P,  la pression atmosphérique au moment de la mesure, en mm Hg.

Le tableau I rassemble les températures d'ébullition corrigées, obtenues pour différentes compositions de difluorométhoxy-2,2,2-trifluoroéthane et de 1,1-dichloro-1-fluoroéthane.

La meilleure estimation de la composition pour laquelle le point d'ébullition est minimum est d'environ 61 % en poids de difluorométhoxy-2,2,2-trifluoroéthane. Le point d'ébullition est de 27,7 °C ± 0,2 °C pour des compositions contenant environ de 43 à 80 % en poids de difluorométhoxy-2,2,2-trifluoroéthane.

TABLEAU I

| Fraction pondérale de $CF_3$-$CH_2$-O-$CHF_2$ dans le mélange | Température d'ébullition (°C) |
|---|---|
| 100 | 29,8 |
| 98,21 | 29,6 |
| 94,80 | 29,2 |
| 90,12 | 28,9 |
| 84,55 | 28,2 |
| 79,63 | 27,9 |
| 75,25 | 27,8 |
| 71,35 | 27,5 |
| 67,79 | 27,6 |
| 63,11 | 27,6 |
| 59,02 | 27,5 |
| 55,43 | 27,5 |
| 51,28 | 27,5 |
| 47,70 | 27,6 |
| 44,41 | 27,7 |
| 42,88 | 27,9 |
| 40,07 | 28,1 |

Exemple 2

Cet exemple illustre l'azéotrope à base de difluorométhoxy-2,2,2-trifluoroéthane et de 2,2-dichloro-1,1,1-trifluoroéthane, mis en évidence à l'aide de la procédure décrite dans l'exemple 1, mais cette fois en ajoutant progressivement de petites quantités de difluorométhoxy-2,2,2-trifluoroéthane à 40 ml de 2,2-dichloro-1,1,1-trifluoroéthane. Le tableau II rassemble les points d'ébullition corrigés, pour différentes compositions en poids de difluorométhoxy-2,2,2-trifluoroéthane et de 2,2-dichloro-1,1,1-trifluoroéthane.

La meilleure estimation de la composition pour laquelle le point d'ébullition est minimum est d'environ 45 % en poids de difluorométhoxy-2,2,2-trifluoroéthane. Le point d'ébullition est de 26,2 °C ± 0,2 °C pour des compositions contenant environ de 25 à 65 % en poids de difluorométhoxy-2,2,2-trifluoroéthane.

TABLEAU II

| Fraction pondérale de<br>$CF_3$-$CH_2$-O-$CHF_2$ dans le mélange | Température d'ébullition (°C) |
|---|---|
| 0 | 27,8 |
| 4,51 | 27,4 |
| 8,64 | 27,3 |
| 12,42 | 27,2 |
| 15,91 | 27,0 |
| 17,55 | 26,8 |
| 19,12 | 26,6 |
| 22,10 | 26,6 |
| 23,51 | 26,5 |
| 24,87 | 26,4 |
| 26,17 | 26,3 |
| 29,85 | 26,2 |
| 32,35 | 26,2 |
| 34,68 | 26,2 |
| 36,86 | 26,1 |
| 38,06 | 26,0 |
| 39,22 | 26,1 |
| 41,40 | 26,1 |
| 44,38 | 26,0 |
| 48,36 | 26,1 |
| 50,33 | 26,2 |
| 55,43 | 26,2 |
| 58,21 | 26,3 |
| 62,13 | 26,4 |
| 64,16 | 26,4 |

Exemples 3 à 8

Différentes mousses de polyuréthanne rigide ont été préparées avec différents agents gonflants, au départ d'une même formulation contenant un isocyanate de diphénylméthane polymérique (MDI) et d'un mélange d'un polyol aminé sur base sucrose, d'un polyéther polyol bromé IXOL B 251 et d'un agent de réticulation hydroxylé. Le diisocyanate de diphénylméthane et les polyols sont introduits dans des rapports tels que l'index 110 soit atteint. La formulation renferme en outre une petite quantité de surfactant siliconé, d'additif phosphoré retardateur de flamme et de catalyseur aminé.

Les agents gonflants utilisés sont les suivants :

Exemple 1 :    40 % poids difluorométhoxy-2,2,2-trifluoroéthane 60 % poids 1,1-dichloro-1-fluoroéthane
Exemple 2 :    40 % poids difluorométhoxy-2,2,2-trifluoroéthane 60 % poids 2,2-dichloro-1,1,1-trifluoroéthane
Exemple 3C:    100 % poids 1,1-dichloro-1-fluoroéthane (HCFC-141b)
Exemple 4C:    100 % poids 2,2-dichloro-1,1,1-trifluoroéthane (HCFC-123)
Exemple 5C:    100 % poids trichlorofluorométhane (CFC-11)

Les mousses sont préparées par mélange intime de tous les ingrédients pendant 15 secondes au moyen d'un agitateur de type multipale tournant à une vitesse de 1600 tours par minute, puis transvasement du mélange dans un moule fermé de 20 X 20 X 10 cm.

Les formulations mises en oeuvre et les propriétés des différentes mousses obtenues sont rassemblées au tableau III.

TABLEAU III

| EXEMPLE N° | 1 | 2 | 3(C) | 4(C) | 5(C) |
|---|---|---|---|---|---|
| **FORMULATION** (parts en poids) | | | | | |
| MDI, index 110 | | | | | |
| Polyols | 90 | 90 | 90 | 90 | 90 |
| Agent de réticulation | 7 | 7 | 7 | 7 | 7 |
| Agent retardateur de flamme | 5 | 5 | 5 | 5 | 5 |
| Surfactant siliconé | 1 | 1 | 1 | 1 | 1 |
| Eau | 1,15 | 1,15 | 1,15 | 1,15 | 1,15 |
| Catalyseur aminé | 1,4 | 1,4 | 1,4 | 1,4 | 1,4 |
| $CF_3-CH_2-O-CHF_2$ | 14 | 15,6 | – | – | – |
| $CFCl_2-CH_3$ (HCFC-141b) | 21 | – | 32 | – | – |
| $CF_3-CHCl_2$ (HCFC-123) | – | 23,4 | – | 38 | – |
| $CFCl_3$ (CFC-11) | – | – | – | – | 36 |
| **CARACTERISTIQUES DES MOUSSES** | | | | | |
| Densité, $kg/m^3$ | | | | | |
| brute, en moule fermé | 40,7 | 40,4 | 41 | 40,6 | 40 |
| nette, en moule fermé | 33,6 | 33,5 | 33,7 | 33,6 | 33,4 |
| Conductibilité thermique | | | | | |
| après 1 jour, W/m.K | 0,021 | 0,021 | 0,020 | 0,020 | 0,019 |
| après 15 jours, W/m.K | 0,022 | 0,023 | 0,023 | 0,022 | 0,021 |
| Structure cellulaire | fine | fine | fine | fine | fine |

**Revendications**

1. Composition azéotropique ou pseudo-azéotropique comprenant le difluorométhoxy-2,2,2-trifluoroéthane et au moins un composé choisi parmi le 2,2-dichloro-1,1,1-trifluoroéthane et le 1,1-dichloro-1-fluoroéthane.

2. Composition selon la revendication 1, caractérisée par une teneur d'environ 5 à 95 % en poids de difluorométhoxy-2,2,2-trifluoroéthane et d'environ 95 à 5 % en poids de 2,2-dichloro-1,1,1-trifluoroéthane.

3. Composition selon la revendication 1, caractérisée par une teneur d'environ 5 à 95 % en poids de difluorométhoxy-2,2,2-trifluoroéthane et d'environ 95 à 5 % en poids de 1,1-dichloro-1-fluoroéthane.

**4.** Utilisation des compositions selon l'une quelconque des revendications 1 à 3 comme agent gonflant de matériaux polymériques cellulaires.

**5.** Utilisation des compositions selon l'une quelconque des revendications 1 à 3 comme agent gonflant de mousses de polyuréthanne.

**6.** Utilisation des compositions selon l'une quelconque des revendications 1 à 3 comme fluide réfrigérant.

**7.** Utilisation des compositions selon l'une quelconque des revendications 1 à 3 comme agent de nettoyage de surfaces solides.

**8.** Utilisation des compositions selon l'une quelconque des revendications 1 à 3 comme agent de défluxage de cartes de circuits imprimés.

**9.** Utilisation des compositions selon l'une quelconque des revendications 1 à 3 comme agent dessicatif pour éliminer l'eau adsorbée à la surface d'objets solides.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 416 777 (ICI) | 1,4,5 | C08J9/14 |
| A | * revendications * | 2,3,6-9 | //C11D7/30 |
| | --- | | C09K5/04 |
| A | US-A-3 922 228 (HUTCHINSON) 25 Novembre 1975 * revendications * | 1-9 | H05K3/26 |
| | ----- | | |

**DOMAINES TECHNIQUES RECHERCHES (Int. Cl.5)**

C08J

Le présent rapport a été établi pour toutes les revendications

| Lieu de la recherche | Date d'achèvement de la recherche | Examinateur |
|---|---|---|
| LA HAYE | 20 NOVEMBRE 1992 | René OUDOT |

EPO FORM 1503 03.82 (P0402)